# EUROPEAN PATENT APPLICATION

(11) **EP 4 691 821 A1**
(43) Date of publication of application: **11.02.2026**
(21) Application number: 23930646.7
(22) Date of filing: 31.03.2023
(51) Int. Cl.: B60K 6/40

(54) **ELECTRIC VEHICLE DRIVE DEVICE**

(71) Applicant: Mitsubishi Electric Mobility Corporation, Tokyo 100-8310 (JP)
(72) Inventor: TAKASE, Shintaro, Tokyo 100-8310 (JP); NAKAMURA, Masashi, Tokyo 100-8310 (JP); SAKAI, Koji, Tokyo 100-8310 (JP)
(74) Representative: Plasseraud IP
(86) International application number: PCT/JP2023/013559
(87) International publication number: WO 2024/202011

(57) **Abstract**

An electric vehicle drive device (1) includes: a motor body portion (5) including a shaft (5a), a rotor (5b) which rotates integrally with the shaft (5a), and a stator (5c) surrounding the rotor (5b) from the radially outer side; a motor case storing the motor body portion (5); a shaft grounding member (11) which grounds the shaft (5a); and a rotation sensor (17) which detects rotation of the shaft (5a). The rotation sensor (17) is provided at a one-side shaft part (5a1) extending toward one side in an axial direction from the rotor (5b). The shaft grounding member (11) is provided at an other-side shaft part (5a2) extending toward another side in the axial direction from the rotor (5b).

## Description

### TECHNICAL FIELD

The present disclosure relates to an electric vehicle drive device.

### BACKGROUND ART

In recent years, considering environmental problems such as global warming, change from a conventional vehicle using an internal combustion engine as a motive force to an electrified vehicle using an electric motor which does not emit carbon dioxide during driving as a motive force has been progressing rapidly. An electric vehicle drive device for driving an electric vehicle includes an electric motor, a speed-reduction mechanism which transmits rotation with a speed reduced from the speed of the electric motor to a vehicle shaft, and an inverter which converts DC power stored in a battery to desired AC power through PWM control to perform drive control for the electric motor efficiently. In addition, in recent years, from the standpoint of shortening a charging period and enhancing efficiency, the power supply voltage side has been configured to have higher voltage.

In a configuration in which power supply voltage is high voltage, if motor control is performed using PWM control, shared voltage called shaft voltage is generated between a high-voltage portion such as a coil and a ground portion of a housing, depending on a ratio of a stray capacitance (capacitance) present inside a motor when highfrequency switching is performed. In principle, the shaft voltage increases as the power supply voltage increases. When a shaft has shaft voltage, a potential difference arises between inner and outer rings of a bearing supporting the shaft, so that slight discharge occurs between rolling elements such as balls and rollers and the inner and outer rings. A raceway surface of the bearing is damaged due to the discharge, so that the bearing function is impaired, thus causing a fault called electrolytic corrosion.

As a measure against shaft voltage, a member called a shaft grounding member may be provided. The shaft grounding member is a member that contacts with the shaft and the housing (ground) slidably therebetween and provides electric conduction therebetween. Providing the shaft grounding member can significantly reduce the shaft voltage. If the shaft grounding member provides conduction between the shaft and the housing at an extremely smaller impedance than the impedance of the stray capacitance inside the motor, the voltage division ratio of the shaft can be extremely reduced. Since the voltage division ratio of the shaft is extremely reduced, an effect of reducing the shaft voltage can be obtained. Therefore, it is required that the shaft and the housing are short-circuited with a resistance value that is as small as possible.

Since the shaft grounding member slides between the shaft and the housing, a certain amount of wear dust is produced during usage. As a matter of course, the shaft grounding member is formed of a conductive material and therefore wear dust is a conductive foreign material. Since the conductive foreign material is gradually accumulated inside the motor, there is a problem of causing a fault in which a part that should be originally insulated is short-circuited. A configuration for solving this problem is disclosed (for example, Patent Document 1). Patent Document 1 discloses a configuration in which a shaft grounding member and a rotation sensor (resolver) are provided in the same space on a side opposite to a speed-reduction mechanism side of a shaft of a motor, and a configuration in which an annular member fixed to the shaft is provided between the shaft grounding member and the resolver in order to prevent a fault in which wear dust of the shaft grounding member enters the resolver and causes short-circuit.

### CITATION LIST

### PATENT DOCUMENT

Patent Document 1: Japanese Laid-Open Patent Publication No. 2022-053335

### SUMMARY OF THE INVENTION

### PROBLEM TO BE SOLVED BY THE INVENTION

In Patent Document 1, it is described that short-circuit of the resolver is prevented by the annular member. However, the annular member is a rotary body and a certain gap is inevitably formed between the annular member and the housing. Therefore, there is a problem that provision of the annular member is insufficient as a measure for preventing entry of wear dust. If a shaft needs to be completely sealed, for example, it is conceivable to use an oil seal (a sliding member formed by a rubber member which is elastically pressed so that gaps on the shaft side and the housing side both disappear). However, the resolver and the shaft grounding member are generally components having larger dimensions than those of the oil seal, and therefore, if the oil seal is provided therebetween, the configuration of the housing is complicated, so that arrangement of members also becomes difficult. It is also conceivable to intentionally use an oil seal having a large diameter, but in this case, the circumferential speed of the sliding surface of the oil seal increases, and thus there is a problem that the allowable rotational speed is lowered.

Accordingly, the present disclosure has been made to solve the above problem, and an object of the present disclosure is to provide an electric vehicle drive device configured to prevent a fault of a rotation sensor due to wear dust of a shaft grounding member.

### MEANS TO SOLVE THE PROBLEM

An electric vehicle drive device according to the present disclosure includes: a motor body portion including a shaft, a rotor which rotates integrally with the shaft, and a stator surrounding the rotor from the radially outer side; a motor case storing the motor body portion; a shaft grounding member which grounds the shaft; and a rotation sensor which detects rotation of the shaft. The rotation sensor is provided at a one-side shaft part extending toward one side in an axial direction from the rotor. The shaft grounding member is provided at an other-side shaft part extending toward another side in the axial direction from the rotor.

### EFFECT OF THE INVENTION

The electric vehicle drive device according to the present disclosure includes: the motor body portion including the shaft, the rotor which rotates integrally with the shaft, and the stator surrounding the rotor from the radially outer side; the motor case storing the motor body portion; the shaft grounding member which grounds the shaft; and the rotation sensor which detects rotation of the shaft. The rotation sensor is provided at the one-side shaft part extending toward one side in the axial direction from the rotor. The shaft grounding member is provided at the other-side shaft part extending toward the other side in the axial direction from the rotor. Thus, since the rotation sensor and the shaft grounding member are located away from each other on the one side and the other side in the axial direction of the motor body portion, entry of wear dust of the shaft grounding member into the rotation sensor can be prevented. Since entry of wear dust of the shaft grounding member into the rotation sensor is prevented, a fault of the rotation sensor due to wear dust of the shaft grounding member can be prevented.

### BRIEF DESCRIPTION OF THE DRAWINGS

[FIG. 1] FIG. 1 is a sectional view schematically showing an electric vehicle drive device according to embodiment 1.
[FIG. 2] FIG. 2 is a plan view schematically showing a motor bracket of the electric vehicle drive device according to embodiment 1.
[FIG. 3] FIG. 3 is a schematic view schematically showing a coolant circulating in the electric vehicle drive device according to embodiment 1.

### DESCRIPTION OF EMBODIMENTS

Hereinafter, an electric vehicle drive device according to embodiments of the present disclosure will be described with reference to the drawings. In the drawings, the same or corresponding members or parts are denoted by the same reference characters, to give description.

### Embodiment 1

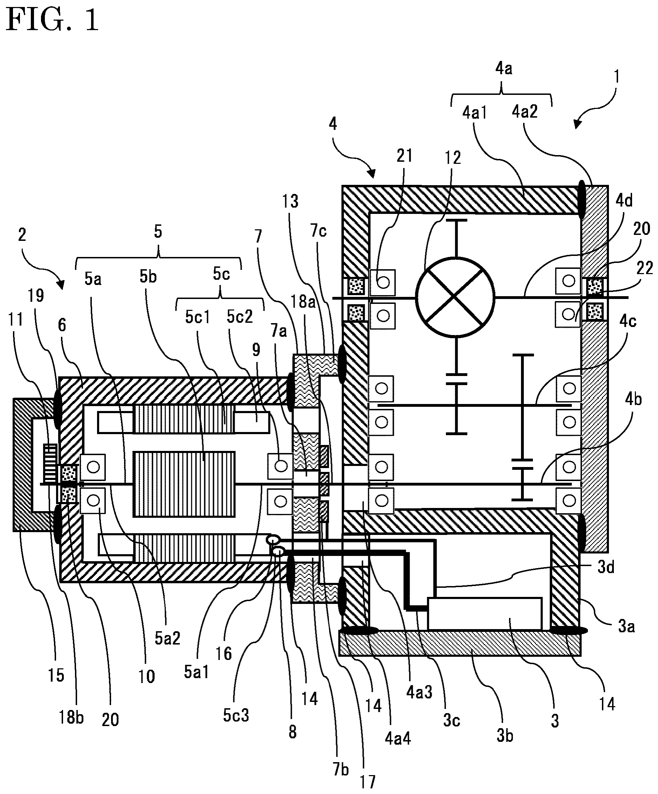

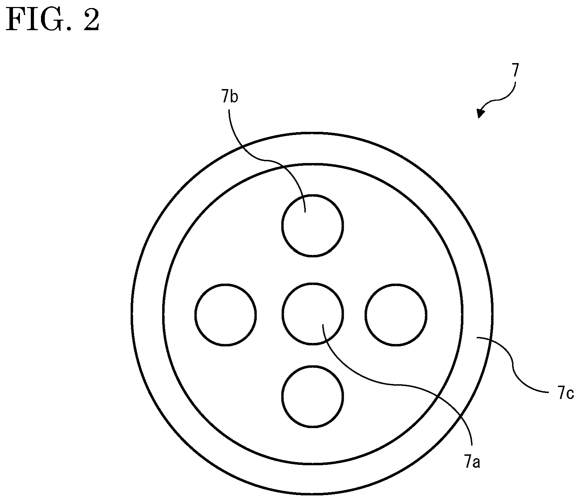

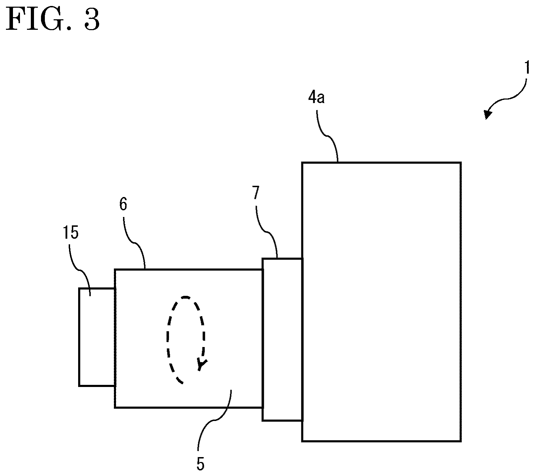

FIG. 1 is a sectional view schematically showing an electric vehicle drive device 1 according to embodiment 1, with the details of the internal configuration not shown. FIG. 2 is a plan view schematically showing a motor bracket 7 of the electric vehicle drive device 1, as seen from one side in the axial direction. FIG. 3 is a schematic view schematically showing a coolant circulating in the electric vehicle drive device 1. The electric vehicle drive device 1 mounted to an electric vehicle is a device that transmits rotation of a motor 2 controlled by an inverter 3 connected to an external DC power supply, to a wheel shaft of the electric vehicle via a speed reducer 4.

### <Electric vehicle drive device 1>

As shown in FIG. 1, the electric vehicle drive device 1 includes: a motor body portion 5 including a shaft 5a, a rotor 5b which rotates integrally with the shaft 5a, and a stator 5c surrounding the rotor 5b from the radially outer side; a motor case storing the motor body portion 5; a shaft grounding member 11 which grounds the shaft 5a; and a rotation sensor 17 which detects rotation of the shaft 5a. In the present embodiment, the motor case is composed of a motor housing 6 to which the stator 5c is fixed on the inner side and which opens on the one side in the axial direction, and the motor bracket 7 which covers the one side in the axial direction of the stator 5c and the rotor 5b and has a center through hole 7a through which a one-side shaft part 5a1 extending toward the one side in the axial direction from the rotor 5b penetrates. The motor body portion 5, the motor housing 6, and the motor bracket 7 form the motor 2.

The electric vehicle drive device 1 further includes: a speed reducer 4 which is connected to the one-side shaft part 5a1 and outputs rotation with a speed reduced from the rotational speed of the shaft 5a; and an inverter 3 which performs conversion between DC power and AC power. The direction in which the motor housing 6 opens and the direction (the extending direction of the one-side shaft part 5a1) in which the shaft 5a of the rotor 5b fitted to the speed reducer 4 extends, are both toward the one side in the axial direction and thus coincide with each other.

The inverter 3 performs DC-AC conversion between a DC power supply (not shown) and a coil 5c2 for a plurality of phases. In the present embodiment, the inverter 3 is provided inside a case member 4a of the speed reducer 4. A part of the case member 4a where the inverter 3 is provided is sealed by an inverter lid 3b via a seal member 14. Since the inverter 3 is provided inside the case member 4a, the electric vehicle drive device 1 can be reduced in size. In the present embodiment, the inverter 3 is stored in an inverter case 3a, and the inverter case 3a is integrated with the case member 4a of the speed reducer 4. With this configuration, the number of components forming the case can be decreased. Since the number of components is decreased, the electric vehicle drive device 1 can be reduced in cost. The inverter 3 may be stored in the inverter case 3a made of metal, whereby noise leaking from the inverter 3 to the outside can be suppressed and noise coming into the inverter case 3a from the outside can be suppressed.

Without limitation to the configuration in which the inverter case 3a is integrated with the case member 4a, the inverter 3 may be provided inside the case member 4a of the speed reducer 4 without providing the inverter case 3a. If the inverter case 3a is not provided, the periphery around the inverter 3 may be sealed by gel or the like so that the inverter 3 is protected from oil of the speed reducer 4 or the like.

The stator 5c includes a tubular core 5c1, the coil 5c2 wound at the core 5c1, and two coil ends 5c3 (only one of them is shown in FIG. 1) which are ends of the coil 5c2 protruding from the core 5c1. A distal end of the coil end 5c3 located on the one side in the axial direction of the core 5c1 has a terminal 8 to which phase power is supplied from the inverter 3. The shaft 5a is rotatably supported by bearings 9 and 10. The bearing 9 supporting the one-side shaft part 5a1 extending toward the one side in the axial direction from the rotor 5b is provided adjacently to the center through hole 7a of the motor bracket 7. The bearing 10 supporting an other-side shaft part 5a2 extending toward another side in the axial direction from the rotor 5b is provided to the motor housing 6.

The speed reducer 4 includes, as a speed-reduction mechanism, a plurality of gears, gear shafts which are a plurality of shafts of the speed reducer 4 and which are integrated with the gears and parallel to the axial direction of the motor 2, and bearings supporting the gear shafts. The speed reducer 4 transmits rotation converted from rotation of the motor 2, to a wheel shaft. In the present embodiment, the speed reducer 4 includes three gear shafts 4b, 4c, and 4d. The shaft 5a and the gear shaft 4b are placed at the same axial position. The shaft 5a and the gear shaft 4b are connected by fitting, and motive force is transmitted therebetween (the manner of fitting is not shown). The gear shaft 4c is a shaft that rotates at a position different from the gear shaft 4b, and transmits a motive force with a speed reduced relative to the gear shaft 4b via gear engagement. The gear shaft 4d is a shaft that rotates at a position different from the gear shaft 4c, and transmits a motive force with a speed reduced relative to the gear shaft 4c via gear engagement.

A differential mechanism 12 is provided to the gear shaft 4d. The differential mechanism 12 imparts a function of branching an output shaft and absorbing a difference between respective rotation speeds, whereby the speed-reduction mechanism can absorb a difference between rotation speeds of left and right wheels during vehicle driving. The speed-reduction mechanism is stored in the case member 4a of the speed reducer 4. In the present embodiment, the case member 4a is composed of a storage portion 4a1 which opens on the one side in the axial direction, and a lid 4a2 which covers an opening of the storage portion 4a1. The lid 4a2 contacts with an end of the storage portion 4a1 formed substantially in parallel to the rotation planes of the gears. The gear shafts 4b, 4c, and 4d are provided between the storage portion 4a1 and the lid 4a2, and are rotatably supported by bearings 21 provided at the bottom of the storage portion 4a1 and bearings 22 provided at the lid 4a2. An oil seal 20 is provided at a through hole of the case member 4a through which the gear shaft 4d penetrates.

The motor housing 6, the motor bracket 7, and the case member 4a are manufactured by die casting using aluminum, for example. In the present embodiment, the motor housing 6 is formed in a bottomed tubular shape that opens on the one side in the axial direction. With this configuration, the motor housing 6 can be mass-produced at low cost by die casting using aluminum, or the like. In addition, the number of components can be decreased as compared to a configuration in which the other side in the axial direction of the motor housing 6 is divided. In addition, components of the motor body portion 5 can be inserted into the motor housing 6 through the opening of the motor housing 6, whereby the motor 2 can be easily assembled. Thus, ease of assembly and productivity of the electric vehicle drive device 1 can be improved.

### <Rotation sensor 17 and shaft grounding member 11>

Arrangement of the rotation sensor 17 and the shaft grounding member 11 and a configuration therearound, which are major parts of the present disclosure, will be described. The rotation sensor 17 detects rotation (a rotational angle and a rotational speed) of the motor body portion 5. The inverter 3 controls operation of the motor 2, using information about rotation of the motor body portion 5 measured by the rotation sensor 17. The rotation sensor 17 is a resolver, for example. The rotation sensor 17 is not limited to a resolver, and may be a magnetic sensor using a magnetoelectric conversion element such as a Hall element. The shaft grounding member 11 is a member provided as a measure against shaft voltage. The shaft grounding member 11 slides between the shaft 5a and the grounded motor case and provides electric conduction therebetween. Providing the shaft grounding member 11 made of a conductive material can significantly reduce shaft voltage.

The rotation sensor 17 is provided at the one-side shaft part 5a1 extending toward the one side in the axial direction from the rotor 5b, and the shaft grounding member 11 is provided at the other-side shaft part 5a2 extending toward the other side in the axial direction from the rotor 5b. Since the shaft grounding member 11 slides between the shaft 5a and the motor case, wear dust is produced during usage. The shaft grounding member 11 is formed of a conductive material and therefore wear dust is a conductive foreign material. If wear dust of the shaft grounding member has entered a part that should be originally insulated, such as the rotation sensor, the insulated part is short-circuited, thus causing a fault. Since the rotation sensor 17 and the shaft grounding member 11 are located away from each other on the one side and the other side in the axial direction of the motor body portion 5, entry of wear dust of the shaft grounding member 11 into the rotation sensor 17 can be prevented. Since entry of wear dust of the shaft grounding member 11 into the rotation sensor 17 is prevented, a fault of the rotation sensor 17 due to wear dust of the shaft grounding member 11 can be prevented.

In the present embodiment, the speed reducer 4 is provided on the one side in the axial direction of the motor case and the rotation sensor 17. Since the speed reducer 4 is provided on the one side in the axial direction of the motor case and the rotation sensor 17, the speed reducer 4 and the shaft grounding member 11 can be provided separately from each other on the one side and the other side in the axial direction of the motor 2. Thus, entry of wear dust of the shaft grounding member 11 into the speed reducer 4 is prevented, whereby a fault of the speed reducer 4 due to wear dust of the shaft grounding member 11 can be prevented. In addition, since the speed reducer 4 is not provided around the shaft grounding member 11, the shaft grounding member 11 can be easily maintained without being influenced by the speed reducer 4.

In the present embodiment, the other-side shaft part 5a2 penetrates through the motor housing 6 which is a part of the motor case, toward the other side in the axial direction. The shaft grounding member 11 is provided at a protruding portion 18b of the other-side shaft part 5a2 protruding toward the other side in the axial direction from the motor housing 6 which is a part of the motor case. The shaft grounding member 11 and the protruding portion 18b are covered by a ground cover 15 which is attachable and detachable. The shaft grounding member 11 provides conduction by sliding during operation of the electric vehicle drive device 1. Therefore, wear of the shaft grounding member 11 gradually progresses through usage. It is desirable to have a configuration that allows the shaft grounding member 11 to be easily maintained. Since the shaft grounding member 11 and the protruding portion 18b are covered by the ground cover 15 which is attachable and detachable, ease of maintenance of the shaft grounding member 11 can be improved. In addition, since the shaft grounding member 11 is covered by the ground cover 15, scattering of wear dust of the shaft grounding member 11 to the outside can be prevented.

In the present embodiment, the ground cover 15 and the motor housing 6 which is a part of the motor case are sealed therebetween by an elastic seal member 19. The elastic seal member 19 is a non-adhesive seal member so that the ground cover 15 is attachable and detachable. The elastic seal member 19 is an O ring, for example, and is a member that is elastically deformable so as to fill and seal a gap. With this configuration, scattering of wear dust of the shaft grounding member 11 to the outside can be further prevented.

In the present embodiment, the inverter 3 is provided on the one side in the axial direction of the motor case and the rotation sensor 17. The rotation sensor 17 and the inverter 3 are connected to each other through an inverter through hole 4a4 provided in the case member 4a. The inverter 3 has a sensor signal line 3d connecting the inverter 3 and the rotation sensor 17. The sensor signal line 3d penetrates through the inverter through hole 4a4. Since the inverter 3 is provided on the one side in the axial direction of the motor case and the rotation sensor 17, the distance between the inverter 3 and the rotation sensor 17 is shortened, so that the length of the sensor signal line 3d can be shortened. In addition, arrangement of the sensor signal line 3d can be simplified, and the rotation sensor 17 and the inverter 3 can be easily connected to each other without being influenced by another member. In addition, since the length of the sensor signal line 3d is shortened, noise resistance and ease of attachment of the sensor signal line 3d can be improved. In FIG. 1, the rotation sensor 17 is attached to a part of the motor bracket 7 on the inner side of a surrounding portion 13 described later. The attachment position of the rotation sensor 17 is not limited thereto. The rotation sensor 17 may be attached on the other side in the axial direction of the case member 4a.

In the present embodiment, the one-side shaft part 5a1 penetrates through the motor bracket 7 which is a part of the motor case, toward the one side in the axial direction. The rotation sensor 17 is provided at a protruding portion 18a of the one-side shaft part 5a1 protruding toward the one side in the axial direction from the motor bracket 7 which is a part of the motor case. The motor bracket 7 which is a part of the motor case through which the one-side shaft part 5a1 penetrates is grounded. The material of the motor bracket 7 is aluminum, for example. With this configuration, since the grounded motor bracket 7 is interposed between the stator 5c and the rotation sensor 17, a leakage magnetic flux generated from the stator 5c can be inhibited from entering the rotation sensor 17 and becoming noise to cause an adverse influence. In the present embodiment, the example in which the rotation sensor 17 is provided on the one side in the axial direction of the motor bracket 7 has been shown. However, placement of the rotation sensor 17 is not limited thereto, and the rotation sensor 17 may be provided on the other side in the axial direction of the motor bracket 7. If the rotation sensor 17 is provided on the other side in the axial direction of the motor bracket 7, the rotation sensor 17 and the inverter 3 are connected to each other by the sensor signal line 3d through an outer through hole 7b and the inverter through hole 4a4. If the rotation sensor 17 is provided on the other side in the axial direction of the motor bracket 7, it is desirable that the periphery of the rotation sensor 17 is surrounded by a magnetic shield.

In the present embodiment, the other-side shaft part 5a2 penetrates through the motor housing 6 which is a part of the motor case, toward the other side in the axial direction. The through hole of the motor housing 6 which is a part of the motor case through which the other-side shaft part 5a2 penetrates is sealed by the oil seal 20 which is a seal member. The seal member is not limited to the oil seal 20, and may be a mechanical seal, an O ring, a labyrinth seal, or the like. With this configuration, wear dust of the shaft grounding member 11 can be prevented from entering an area where the stator 5c which is a high-voltage part of the motor 2 is provided. Since entry of wear dust of the shaft grounding member 11 into the area where the stator 5c is provided is prevented, short-circuit of the motor body portion 5 can be prevented.

In the present embodiment, as shown in FIG. 3, the motor body portion 5 is cooled by a coolant circulating inside the motor case. A broken-line arrow in FIG. 3 schematically shows the circulating coolant. The coolant is oil, for example. In the present embodiment, as shown in FIG. 1, the through hole of the motor housing 6 is sealed by the oil seal 20, and therefore wear dust of the shaft grounding member 11 does not enter the inside of the motor case. If the through hole of the motor housing 6 is not sealed and the inside of the motor case is cooled by a coolant, wear dust of the shaft grounding member 11 entering the inside of the motor case spreads in the motor case by the coolant. When wear dust spreads in the motor case, a risk of dielectric breakdown in a high-voltage part increases and a filter on an oil circulation path is clogged, thus causing a fault in the electric vehicle drive device 1.

In addition, if the through hole of the motor housing 6 is not sealed and the inside of the motor case is cooled by oil which is a coolant, oil adheres to a sliding part of the shaft grounding member 11. The oil adhered to the sliding part forms an oil film, so that the ground impedance of the shaft grounding member 11 increases and the effect of grounding by the shaft grounding member 11 is deteriorated, thus causing a fault in the electric vehicle drive device 1.

In the present embodiment, since the through hole of the motor housing 6 is sealed by the oil seal 20, the above-described faults do not occur and the motor body portion 5 can be cooled by the coolant circulating inside the motor case. Thus, the motor body portion 5 can be effectively cooled by the coolant.

### <Sealing structure>

A sealing structure of the present disclosure will be described. As shown in FIG. 2, the motor bracket 7 has one or more outer through holes 7b penetrating in the axial direction, on the radially outer side of the center through hole 7a. In the present embodiment, the motor bracket 7 has four outer through holes 7b. However, the number of the outer through holes 7b is not limited to four. As shown in FIG. 1, the motor bracket 7 has a tubular surrounding portion 13 which surrounds, over an entire circumference, the radially outer side of openings on the one side in the axial direction of all the outer through holes 7b, and an end surface on the one side in the axial direction of the surrounding portion 13 contacts, over an entire circumference, with the case member 4a of the speed reducer 4 via a seal member 14 so as to be sealed. The motor bracket 7 is fixed to the case member 4a. The seal member 14 is, for example, a liquid gasket, a metal gasket, or a rubber member such as an O ring, but without limitation thereto, the seal member 14 may be another member. In the configuration of the present disclosure, the seal member 14 is not limited at all.

The motor bracket 7 covers the opening on the one side in the axial direction of the motor housing 6. The motor bracket 7 has a tubular bracket one-side extending portion 7c extending toward the one side in the axial direction from a part where the center through hole 7a and the outer through holes 7b are provided, and the bracket one-side extending portion 7c is the surrounding portion 13. With this configuration, it is possible to form the motor housing 6 in a simple bottomed tubular shape. Since the shape of the motor housing 6 is simple, the motor housing 6 can be reduced in cost.

In the present embodiment, the motor bracket 7 and the opening on the one side in the axial direction of the motor housing 6 may be sealed therebetween by the seal member 14. The motor housing 6 is fixed to the motor bracket 7. With this configuration, the inside of the motor housing 6 can be easily protected from the outside. A case through hole 4a3 through which the one-side shaft part 5a1 or the gear shaft 4b which is the shaft of the speed reducer 4 connected to the one-side shaft part 5a1 penetrates is provided at a part of the case member 4a of the speed reducer 4 that is surrounded by the surrounding portion 13. With this configuration, the one-side shaft part 5a1 and the gear shaft 4b can be easily connected to each other through the case through hole 4a3. In addition, since the case through hole 4a3 is surrounded by the surrounding portion 13, the case through hole 4a3 can be sealed against the outside.

### <Wiring structure>

A wiring structure in the present disclosure will be described. The inverter through hole 4a4 penetrating in the axial direction is provided at a part of the case member 4a of the speed reducer 4 that is surrounded by the surrounding portion 13. The inverter 3 and the motor body portion 5 are connected to each other through the outer through hole 7b and the inverter through hole 4a4. The motor body portion 5 has a plurality of parts connected to the inverter 3. Therefore, various connection lines such as a phase power line 3c and the sensor signal line 3d are provided between the motor body portion 5 and the inverter 3. With this configuration, various connection lines can be easily connected to the motor body portion 5 and the inverter 3 through the outer through hole 7b and the inverter through hole 4a4. In addition, since the end surface of the surrounding portion 13 contacts with the case member 4a of the speed reducer 4 via the seal member 14 and the inverter through hole 4a4 is surrounded by the surrounding portion 13, the inverter through hole 4a4 can be sealed without providing an additional sealing structure. Since an additional sealing structure need not be provided, productivity of the electric vehicle drive device 1 can be improved.

In the present embodiment, the distal end of the coil end 5c3 located on the one side in the axial direction of the core 5c1 has the terminal 8 to which phase power is supplied from the inverter 3, and the terminal 8 and the inverter 3 are connected to each other through the outer through hole 7b and the inverter through hole 4a4. The inverter 3 has the phase power line 3c through which phase power is supplied from the inverter 3 to the terminal 8. The phase power line 3c penetrates through the outer through hole 7b and the inverter through hole 4a4. With this configuration, the terminal 8 and the inverter 3 can be connected to each other by the phase power line 3c through the outer through hole 7b and the inverter through hole 4a4, whereby the terminal 8 and the inverter 3 can be easily connected to each other. In addition, the length of the phase power line 3c which is a line connecting the terminal 8 and the inverter 3 can be shortened. Since the length of the phase power line 3c is shortened, the influence of noise can be reduced.

In the present embodiment, the motor body portion 5 has a temperature sensor 16. The temperature sensor 16 measures a temperature of the coil 5c2. The temperature sensor 16 is a thermistor, for example. The inverter 3 controls operation of the motor 2, using temperature information measured by the temperature sensor 16. The temperature sensor 16 is attached to the coil end 5c3 located on the one side in the axial direction of the core 5c1, and the temperature sensor 16 and the inverter 3 are connected to each other through the outer through hole 7b and the inverter through hole 4a4. The inverter 3 has the sensor signal line 3d connecting the inverter 3 and the temperature sensor 16. The sensor signal line 3d penetrates through the outer through hole 7b and the inverter through hole 4a4. With this configuration, the temperature sensor 16 and the inverter 3 can be connected to each other by the sensor signal line 3d through the outer through hole 7b and the inverter through hole 4a4, whereby the temperature sensor 16 and the inverter 3 can be easily connected to each other without being influenced by another member. In addition, the length of the sensor signal line 3d which is a line connecting the temperature sensor 16 and the inverter 3 can be shortened. Since the length of the sensor signal line 3d is shortened, the influence of noise can be reduced.

As described above, in the electric vehicle drive device 1 according to embodiment 1, the rotation sensor 17 is provided at the one-side shaft part 5a1 extending toward the one side in the axial direction from the rotor 5b, and the shaft grounding member 11 is provided at the other-side shaft part 5a2 extending toward the other side in the axial direction from the rotor 5b. Thus, since the rotation sensor 17 and the shaft grounding member 11 are located away from each other on the one side and the other side in the axial direction of the motor body portion 5, entry of wear dust of the shaft grounding member 11 into the rotation sensor 17 can be prevented. Since entry of wear dust of the shaft grounding member 11 into the rotation sensor 17 is prevented, a fault of the rotation sensor 17 due to wear dust of the shaft grounding member 11 can be prevented.

The speed reducer 4 may be provided on the one side in the axial direction of the motor case and the rotation sensor 17. Thus, since the speed reducer 4 and the shaft grounding member 11 can be provided separately from each other on the one side and the other side in the axial direction of the motor 2, entry of wear dust of the shaft grounding member 11 into the speed reducer 4 is prevented, whereby a fault of the speed reducer 4 due to wear dust of the shaft grounding member 11 can be prevented. In addition, since the speed reducer 4 is not provided around the shaft grounding member 11, the shaft grounding member 11 can be easily maintained without being influenced by the speed reducer 4.

The other-side shaft part 5a2 may penetrate through the motor housing 6 toward the other side in the axial direction, the shaft grounding member 11 may be provided at the protruding portion 18b of the other-side shaft part 5a2 protruding toward the other side in the axial direction from the motor housing 6, and the shaft grounding member 11 and the protruding portion 18b may be covered by the ground cover 15 which is attachable and detachable. Thus, ease of maintenance of the shaft grounding member 11 can be improved. In addition, since the shaft grounding member 11 is covered by the ground cover 15, scattering of wear dust of the shaft grounding member 11 to the outside can be prevented. The ground cover 15 and the motor housing 6 may be sealed therebetween by the elastic seal member 19. Thus, scattering of wear dust of the shaft grounding member 11 to the outside can be further prevented.

The inverter 3 may be provided on the one side in the axial direction of the motor case and the rotation sensor 17. Thus, the distance between the inverter 3 and the rotation sensor 17 is shortened, so that the length of the sensor signal line 3d can be shortened. In addition, arrangement of the sensor signal line 3d can be simplified, and the rotation sensor 17 and the inverter 3 can be easily connected to each other without being influenced by another member. In addition, since the length of the sensor signal line 3d is shortened, noise resistance and ease of attachment of the sensor signal line 3d can be improved.

The one-side shaft part may penetrate through the motor bracket 7 toward the one side in the axial direction, the rotation sensor 17 may be provided at the protruding portion 18a of the one-side shaft part 5a1 protruding toward the one side in the axial direction from the motor bracket 7, and the motor bracket 7 which is a part of the motor case through which the one-side shaft part 5a1 penetrates may be grounded. Thus, since the grounded motor bracket 7 is interposed between the stator 5c and the rotation sensor 17, a leakage magnetic flux generated from the stator 5c can be inhibited from entering the rotation sensor 17 and becoming noise to cause an adverse influence.

The other-side shaft part 5a2 may penetrate through the motor housing 6 toward the other side in the axial direction, and the through hole of the motor housing 6 through which the other-side shaft part 5a2 penetrates may be sealed by the seal member. Thus, wear dust of the shaft grounding member 11 can be prevented from entering an area where the stator 5c which is a high-voltage part of the motor 2 is provided. Since entry of wear dust of the shaft grounding member 11 into the area where the stator 5c is provided is prevented, short-circuit of the motor body portion 5 can be prevented.

The motor body portion 5 may be cooled by a coolant circulating inside the motor case. In the present disclosure, since the through hole of the motor housing 6 is sealed by the oil seal 20, wear dust of the shaft grounding member 11 does not enter the inside of the motor case. Thus, it is possible to effectively cool the motor body portion 5 by the coolant without taking a fault due to wear dust into consideration. In addition, since the coolant does not adhere to the sliding part of the shaft grounding member 11, it is possible to effectively cool the motor body portion 5 by the coolant without taking, into consideration, deterioration in the effect of grounding by the shaft grounding member 11 due to the coolant.

In the drawings, the motor 2 described in the present disclosure is shown as a configuration of an inner-rotor and radial-gap type which is often used. The configuration of the motor 2 is not limited thereto, and may be another configuration, e.g., an outer-rotor and radial-gap type, an axial-gap type, or another motor type. The configuration of the present disclosure is applicable also to a motor having another configuration, and is not intended to limit the configuration of the motor.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1 electric vehicle drive device
2 motor
3 inverter
3a inverter case
3b inverter lid
3c phase power line
3d sensor signal line
4 speed reducer
4a case member
4a1 storage portion
4a2 lid
4a3 case through hole
4a4 inverter through hole
4b, 4c, 4d gear shaft
5 motor body portion
5a shaft
5a1 one-side shaft part
5a2 other-side shaft part
5b rotor
5c stator
5c1 core
5c2 coil
5c3 coil end
6 motor housing
7 motor bracket
7a center through hole
7b outer through hole
7c bracket one-side extending portion
8 terminal
9 bearing
10 bearing
11 shaft grounding member
12 differential mechanism
13 surrounding portion
14 seal member
15 ground cover
16 temperature sensor
17 rotation sensor
18a protruding portion
18b protruding portion
19 elastic seal member
20 oil seal
21, 22 bearing

## Claims

1. An electric vehicle drive device comprising:
a motor body portion including a shaft, a rotor which rotates integrally with the shaft, and a stator surrounding the rotor from the radially outer side;
a motor case storing the motor body portion;
a shaft grounding member which grounds the shaft; and
a rotation sensor which detects rotation of the shaft, wherein
the rotation sensor is provided at a one-side shaft part extending toward one side in an axial direction from the rotor, and
the shaft grounding member is provided at an other-side shaft part extending toward another side in the axial direction from the rotor.

2. The electric vehicle drive device according to claim 1, further comprising a speed reducer which is connected to the one-side shaft part and outputs rotation with a speed reduced from a rotational speed of the shaft, wherein
the speed reducer is provided on the one side in the axial direction of the motor case and the rotation sensor.

3. The electric vehicle drive device according to claim 1 or 2, wherein
the other-side shaft part penetrates through the motor case toward the other side in the axial direction,
the shaft grounding member is provided at a protruding portion of the other-side shaft part protruding toward the other side in the axial direction from the motor case, and
the shaft grounding member and the protruding portion are covered by a ground cover which is attachable and detachable.

4. The electric vehicle drive device according to claim 3, wherein
the ground cover and the motor case are sealed therebetween by an elastic seal member.

5. The electric vehicle drive device according to claim 1 or 2, further comprising an inverter which performs conversion between DC power and AC power, wherein
the inverter is provided on the one side in the axial direction of the motor case and the rotation sensor.

6. The electric vehicle drive device according to claim 1 or 2, wherein
the one-side shaft part penetrates through the motor case toward the one side in the axial direction,
the rotation sensor is provided at a protruding portion of the one-side shaft part protruding toward the one side in the axial direction from the motor case, and
a part of the motor case through which the one-side shaft part penetrates is grounded.

7. The electric vehicle drive device according to claim 1 or 2, wherein
the other-side shaft part penetrates through the motor case toward the other side in the axial direction, and
a through hole of the motor case through which the other-side shaft part penetrates is sealed by a seal member.

8. The electric vehicle drive device according to claim 7, wherein
the motor body portion is cooled by a coolant circulating inside the motor case.
